# EUROPÄISCHE PATENTANMELDUNG

(11) **EP 2 524 791 A2**
(43) Veröffentlichungstag der Anmeldung: **21.11.2012**
(21) Anmeldenummer: 12162146.0
(22) Anmeldetag: 29.03.2012
(51) Int. Cl.: B29C 49/12

(54) **Hydraulisches Recken**

(30) Priorität: 18.05.2011 DE 102011076062
(71) Anmelder: Krones AG, 93073 Neutraubling (DE)
(72) Erfinder: Lappe, Ulrich, 93059 Regensburg (DE)
(74) Vertreter: Grünecker, Kinkeldey, Stockmair & Schwanhäusser

(57) **Zusammenfassung**

Recksystem für Streckblasmaschinen zum Streckblasen von Behältern (10) aus Vorformlingen, mit wenigstens einer Reckeinheit (5), die zum Recken eines Vorformlings hydraulisch betätigt wird, mit einem Hydraulikdruckbehälter (11), der zumindest teilweise mit einem Hydraulikmedium (12), beispielsweise Wasser, gefüllt ist und der zumindest teilweise mit einem gasförmigen Medium (13), beispielsweise Druckluft, gefüllt ist; wobei die Reckeinheit (5) einen Reckzylinder (6) und einen Reckkolben (7) umfasst, wobei das Recksystem ausgebildet ist, das Hydraulikmedium (12) aus dem Hydraulikdruckbehälter (11) zum Reckzylinder (6) der Reckeinheit (5) zu leiten, wodurch der Reckkolben (7) im Reckzylinder (6) hydraulisch bewegt werden kann. Ein Verfahren zum Recken von Vorformlingen wird auch beansprucht.

## Beschreibung

Die Erfindung betrifft ein Recksystem für Streckblasmaschinen zum Streckblasen von Behältern aus Vorformlingen, mit wenigstens einer Reckeinheit, die zum Recken eines Vorformlings hydraulisch betätigt wird, mit einem Hydraulikdruckbehälter, der zumindest teilweise mit einem Hydraulikmedium, beispielsweise Wasser, gefüllt ist und der zumindest teilweise mit einem gasförmigen Medium, beispielsweise Druckluft, gefüllt ist, gemäß dem Oberbegriff des Patentanspruchs 1, sowie ein entsprechendes Verfahren gemäß dem Oberbegriff des Patentanspruchs 10.

In Blasmaschinen zum Streckblasen von Kunststoffbehältern wird typischerweise der Behälter aus einem Vorformling geformt und zu einem Behälter mittels Druckluft ausgeformt. Dabei ist es in Streckblasmaschinen üblich, mit pneumatisch oder elektrisch angetriebenen Recksystemen zu arbeiten. Das heißt, ein Vorformling wird mittels einer Reckeinheit gereckt, die pneumatisch oder elektrisch betrieben wird. Häufig werden dabei die pneumatischen/elektrischen Reckzylinder der Reckeinheit auf eine Kurvenbahn gedrückt. Die Form dieser Kurve bestimmt und kontrolliert den Bewegungsablauf, d.h. den Weg, eines Kolbens im Reckzylinder. Insbesondere können dadurch der Druck im Reckzylinder und damit die aufgebrachte Kraft zum Recken kontrolliert und eine maximale Reckkraft eingestellt werden. Ein solches Verfahren ist Stand der Technik. Beispielsweise zeigt die US 5 866 175 eine Streckblasmaschine mit einem entsprechenden Kontrollsystem. Mehrere Blasstationen sind auf einem rotierenden Rad angeordnet. An den Stationen wird der Reckvorgang durchgeführt. Der Reckvorgang wird durch Druckluft gesteuert. Derartige Systeme benötigen jedoch eine nicht unerhebliche Menge Druckluft, die in der Regel verbraucht wird. Es gibt Ideen zum wenigstens teilweisen Wiederverwenden/Recyceln der Druckluft, so dass der Luftverbrauch verringert wird, aber häufig nicht eliminiert werden kann.

Alternativ existieren auch Systeme, wie etwa voll mechanische Systeme, bei denen eine umlaufende Steuerkurve, etwa eine Steuerschiene, die Recksysteme permanent führt. Dabei besteht zwar kein zusätzlicher Luftbedarf, jedoch neigen derartige Maschinen häufig zu starken Vibrationen durch die mechanische Kopplung, die in der Regel hart sein kann. Außerdem ist eine voll umlaufende mechanische Kurve, d.h. eine mechanische vollständige Führung der Reckeinheit sehr aufwändig zu realisieren und häufig störungsanfällig. Ferner können schnelle Reckgeschwindigkeiten mit einem derartigen System nur schwer realisiert werden. Die umlaufende Kurve, insbesondere eine vollständig umlaufende Kurveneinheit/Schieneneinheit erschwert zudem die Zugänglichkeit zur Maschine.

Angesichts der oben skizzierten Probleme und des Standes der Technik ist es Aufgabe der vorliegenden Erfindung, eine Lösung bereitzustellen, bei der der Luftverbrauch deutlich reduziert oder gar eliminiert werden kann.

Diese Aufgabe wird mit einem Recksystem für Streckblasmaschinen zum Streckblasen von Behältern mit wenigstens einer Reckeinheit entsprechend Patentanspruch 1 gelöst. Ferner wird diese Aufgabe ebenfalls mit einem Verfahren zum Recken von Vorformlingen mittels eines Recksystems entsprechend Patentanspruch 10 gelöst.

Die Erfindung stellt ein Recksystem für Streckblasmaschinen zum Streckblasen von Behältern aus Vorformlingen bereit, mit wenigstens einer Reckeinheit, die zum Recken eines Vorformlings hydraulisch betätigt wird, mit einem Hydraulikdruckbehälter, der zumindest teilweise mit einem Hydraulikmedium, beispielsweise Wasser, gefüllt ist und der zumindest teilweise mit einem gasförmigen Medium, beispielsweise Druckluft, gefüllt ist; wobei die Reckeinheit einen Reckzylinder und einen Reckkolben umfasst, wobei das Recksystem ausgebildet ist, das Hydraulikmedium aus dem Hydraulikdruckbehälter zum Reckzylinder der Reckeinheit zu leiten, wodurch der Reckkolben im Reckzylinder hydraulisch bewegt werden kann.

Dabei wird also die Reckeinheit nicht mehr pneumatisch, sondern hydraulisch betätigt. Während beim pneumatischen Recken in der Reckeinheit Druckluft verwendet wird, wird nunmehr die Reckeinheit hydraulisch betätigt. Verluste an Druckluft in der Reckeinheit können somit vermieden werden. Das Hydraulikmedium wird aus dem Hydraulikdruckbehälter bereit gestellt. Typischerweise kann in dem Hydraulikdruckbehälter als Hydraulikmedium Wasser verwendet werden. Es ist aber ebenso möglich, ein anderes geeignetes Hydraulikmedium, insbesondere eine andere Hydraulikflüssigkeit als Wasser zu verwenden. Beispielsweise ist der Hydraulikdruckbehälter tank- oder kesselartig ausgebildet und bildet etwa einen geschlossenen Behälter. Das Hydraulikmedium, z.B. Wasser, ist typischerweise im unteren Teil des Behälters befindlich. Vorteilhaft ist mehr als die Hälfte des Behälters mit dem Hydraulikmedium gefüllt. Oberhalb des Hydraulikmediums, also des Spiegels des Mediums, befindet sich beispielsweise ein gasförmiges Medium, wie etwa Druckluft. Es ist ebenso möglich, anstelle von Druckluft ein anderes Gas, wie z.B. Stickstoff zu verwenden. Dabei steht die Druckluft in dem Hydraulikdruckbehälter unter Druck. Der Druck dieser Druckluft im Hydraulikdruckbehälter treibt das Hydraulikmedium zur Reckeinheit, wo der Zylinder entsprechend hydraulisch betätigt werden kann. Da die Druckluft im Hydraulikdruckbehälter nicht direkt zum Betätigen der Reckeinheit des Recksystems benutzt wird, ist das Volumen der Druckluft oberhalb der Oberfläche des Hydraulikmediums im Hydraulikdruckspeicher im Wesentlichen konstant. Das heißt, im Mittel gibt es praktisch keine Verluste an Druckluft in dem Hydraulikdruckbehälter. Die Verwendung eines Hydraulikmediums, wie etwa Wasser oder von anderen hydraulischen Medien in der Reckeinheit bringt ferner den Vorteil, dass diese nicht kompressibel sind. Entsprechend entstehen keine Wärmeverluste bei der Verwendung dieser Medien.

Das Recksystem kann mit einem Ringkanal oder mit einem geometrisch anders geformten Druckbehälter (z.B. Kugel) ausgestattet sein. Das Hydraulikmedium bewegt beispielsweise den Reckkolben in Reckzylinder nach unten zum Ausführen des Reckvorgangs. Ferner kann das Hydraulikmedium ebenso dazu verwendet werden, den Reckkolben im Reckzylinder nach oben zu bewegen. Es kann sich also bei dem Reckzylinder insbesondere um einen doppelt wirkenden Zylinder handeln, wo auf beiden Seiten des Reckkolbens Hydraulikmedium zum Betätigen des Kolbens im Zylinder verwendet werden kann.

Im erfindungsgemäßen Recksystem, wie oben beschrieben, kann das Recksystem ferner wenigstens eine Zuleitung, wie etwa ein Rohr oder dergleichen, umfassen, um das Hydraulikmedium aus dem Hydraulikdruckbehälter zum Reckzylinder zu leiten. Außerdem kann es wenigstens eine Leitung, wie etwa ein Rohr oder dergleichen, umfassen, um das Hydraulikmedium aus dem Reckzylinder wieder dem Hydraulikdruckbehälter zurückzuleiten. Hierdurch können Verluste an Hydraulikmedium vermieden werden.

In dem erfindungsgemäßen Recksystem, wie oben beschrieben, kann die wenigstens eine Zuleitung wenigstens ein erstes Ventil umfassen und ferner die wenigstens eine Leitung wenigstens ein zweites Ventil umfassen, wobei die ersten und zweiten Ventile das Zuleiten und das Ableiten des Hydraulikmedium aus dem Reckzylinder steuern. Da der Hydraulikdruckbehälter typischerweise unter Druck steht, erfolgt beispielsweise das Zuleiten und das Ableiten von Hydraulikmedium zum bzw. aus dem Reckzylinder, also der Reckeinheit, durch Steuerung des wenigstens einen Ventils der Zuleitung und des wenigstens einen Ventils der Ableitung/Rückleitung. Dabei können sowohl Zuleitung als auch Ableitung ebenso mehrere Ventile umfassen. Ebenso ist es möglich, dass die Zuleitung mehrere getrennte Zuleitungen umfasst. Dabei kann jede der getrennten Zuleitungen wenigstens ein Ventil umfassen. Ebenso ist es möglich, dass die wenigstens eine Leitung zum Ableiten mehrere Teilleitungen umfasst, oder dass diese Teilleitungen sogar separat sind. Auch hierbei können diese Leitungen jeweils wenigstens ein Ventil umfassen. Die genannten Ventile können dabei einfache Öffnungs- oder Schließventile umfassen. Sie können aber ebenso Wegeventile mit mehreren Schaltstellungen umfassen. Insbesondere kann ein Ventil mit mehreren Schaltstellungen für mehrere Wege das Zuleiten von Hydraulikmedium oberhalb oder unterhalb der Kolbenfläche des Reckkolbens im Recksystem steuern. Ebenso kann in der Leitung, die das Hydraulikmedium aus dem Reckzylinder wieder ableitet, ein Ventil vorgesehen sein, welches es ermöglicht, Hydraulikmedium aus dem Reckzylinder oberhalb oder unterhalb der Kolbenfläche des Reckkolbens im Reckzylinder abzuleiten. Es versteht sich, dass die verwendeten Ventile die entsprechenden Leitungen, also die Zu- und/oder Ableitungen/Rückleitung, auch verschließen können. Ebenso können die Ventile durch eine geeignete Steuereinheit, wie etwa einen Computer gesteuert werden. Diese Steuereinheit kann auch extern vorgesehen sein. Die Steuereinheit kann ggf. auch drahtlos von einem externen Steuergerät, wie etwa einem Computer, gesteuert werden, wobei in der Anlage ein entsprechender Empfänger vorgesehen sein kann.

In dem erfindungsgemäßen Recksystem, wie oben beschrieben, kann das Recksystem ferner eine Pumpe, wie etwa eine Kolbenpumpe, umfassen, wobei die Pumpe in der wenigstens einen Leitung zum Rückleiten des Hydraulikmediums in den Hydraulikdruckbehälter vorgesehen ist.

Das erfindungsgemäße Recksystem, wie oben beschrieben, kann ferner einen zweiten Behälter umfassen, um das Hydraulikmedium aufzunehmen, das beim Bewegen des Reckkolbens im Reckzylinder aus dem Reckzylinder geleitet wird, wobei der zweite Behälter in der wenigstens einen Leitung zum Rückleiten des Hydraulikmediums vorgesehen ist, wobei die Pumpe zwischen dem zweiten Behälter und dem Hydraulikdruckbehälter vorgesehen ist. Der zweite Behälter dient also als Speicherbehälter für das Hydraulikmedium. Aus diesem zweiten Behälter, der ein Speicherbehälter oder Sammelbehälter für das Hydraulikmedium sein kann, kann das Hydraulikmedium wieder in den Hydraulikdruckbehälter gepumpt werden. Dabei ist die Pumpe typischerweise so ausgebildet, dass sie aus dem Sammelbehälter des Hydraulikmediums das Hydraulikmedium in den Hydraulikdruckbehälter zurück pumpen kann, und zwar gegen den Innendruck im Hydraulikdruckbehälter. Die Pumpe, welche eine Kolbenpumpe sein kann, kann entweder elektrisch betrieben sein, oder kann mechanisch, etwa über die Drehbewegung eines Blasrades, angetrieben sein. Dabei kann das Blasrad als Rundläufer ausgebildet sein, an dem mehrere Blasstationen vorgesehen sein können. Ebenso kann die Kolbenpumpe durch einen Druckluftmotor angetrieben werden. Gegebenenfalls kann die Pumpe auch durch Luft, wie etwa Druckluft angetrieben werden, die an anderer Stelle in dem System eingespart werden kann.

Der Hydraulikdruckbehälter des oben beschriebenen Recksystems kann ferner typischerweise eine Zuführleitung für das gasförmige Medium aufweisen. Diese kann mit einem Ventil, wie etwa einem Rückschlagventil versehen sein. Der Hydraulikdruckbehälter kann ferner eine Sicherheitsleitung mit einem Sicherheitsventil aufweisen. Der Druck im Hydraulikdruckbehälter wird über das Volumen Druckluft/gasförmiges Medium oberhalb der Oberfläche des Hydraulikmediums, beispielsweise Wasser, im Mittel konstant gehalten. Das Volumen dieser Druckluft dient dabei als "Pufferspeicher". Beispielsweise können kleine Druckschwankungen, welche durch raschen Volumenabfluss an Hydraulikmedium in die Reckeinheit erzeugt werden können, durch das Volumen ausgeglichen werden. Dabei liegt der Druck im Hydraulikdruckbehälter beispielsweise zwischen einem vordefinierten Minimalwert und einem vordefinierten Maximalwert. Das heißt, im Wesentlichen kann der Druck des gasförmigen Mediums/der Druckluft einmal über eine Zuführleitung mit einem Rückschlagventil eingespeist werden. Der minimale Druck kann entsprechend des Systems und entsprechend der Leitung eingestellt werden. Ferner kann der Hydraulikdruckbehälter ein Sicherheitsventil mit einer Sicherheitsleitung aufweisen, welche dafür sorgen kann, dass der Druck im Kopfraum des Hydraulikdruckbehälters nicht über einen vordefinierten maximalen Wert steigen kann. Mit den beiden Systemen kann der Druck im Hydraulikdruckbehälter also zwischen vordefinierten, ggf. anlagenspezifischen Minimal- und Maximaldruckwerten liegen. Beispielsweise kann der Druck zwischen 6 bar und 10 bar liegen.

Im Kopfraumgasvolumen ergibt sich also ein im Mittel konstanter Druck. Dieser Druck kann zeitlich kleine Druckspitzen aufweisen entsprechend dem schnellen Abfluss an Hydraulikmedium an die Reckeinheit. Entsprechend kann das Gasvolumen genügend groß gewählt werden. Die im Kopfraum komprimierte Luft kann sich kurzfristig erhitzen, wird aber so rasch wieder entspannt und dadurch wieder abgekühlt, dass praktisch keine Verlustwärme entstehen kann, welche Zeit genug haben könnte, das System zu verlassen. Durch die kurzen Zeiträume, in denen Expansion / Kompression stattfindet, ist der Prozess praktisch adiabatisch.

Es entsteht als Verlust lediglich Wärme durch innere Reibung des Gases und der Hydraulikflüssigkeit. Diese muss durch geeignete Maßnahmen im Dauerbetrieb abgeleitet werden, ist aber wesentlich geringer als die Abwärme bei der Erzeugung von Druckluft für die pneumatische Variante nach dem Stand der Technik.

Zusätzlich könnte auch eine weitere Form der Energiespeicherung zum Tragen kommen, z.B. könnte eine Feder verwendet werden, um zusätzlich eine Möglichkeit zur Druckenergiespeicherung bereit zu stellen.

Ferner kann die Rücklaufpumpe und Ventile im Rücklauf ggf. über einen Drucksensor im Kopfraum geregelt werden, mit dem Ziel, einen möglichst gleichmäßigen Druckverlauf im Kopfraum bereitzustellen.

Der Druck im zweiten Behälter des erfindungsgemäßen Recksystems kann im Wesentlichen dem Umgebungsdruck entsprechen. Das heißt, der zweite Behälter ist im Wesentlichen drucklos im Vergleich zum Umgebungsdruck. Der zweite Behälter kann als nicht vollständig geschlossener Behälter ausgebildet sein. Insbesondere kann der zweite Behälter als ein Sammelbehälter ausgebildet sein.

Die Erfindung stellt ferner ein Verfahren zum Recken von Vorformlingen mittels eines Recksystems bereit mit wenigstens einer Reckeinheit bereit, die einen Reckzylinder und einen Reckkolben umfasst, sowie mit einem Hydraulikdruckbehälter, der zumindest teilweise mit einem Hydraulikmedium wie etwa Wasser gefüllt ist und der zumindest teilweise mit einem gasförmigen Medium, beispielsweise Druckluft, gefüllt ist, wobei die Reckeinheit wenigstens eine Zuleitung, beispielsweise ein Rohr, und wenigstens eine Leitung, beispielsweise ein Rohr, umfasst, wobei das Verfahren das Recken eines Vorformlings durch hydraulisches Betätigen der Reckeinheit umfasst; sowie das Zuleiten des Hydraulikmedium zum Reckzylinder der Reckeinheit durch die wenigstens eine Zuleitung; und das Bewegen des Reckkolbens im Reckzylinder mittels des zugeführten Hydraulikmediums.

Für das erfindungsgemäße Recksystem, das in dem Verfahren zum Einsatz kommt, gilt das bereits oben Gesagte. Für die Zuleitung gilt das bereits oben Gesagte, wobei das Verfahren ferner das Steuern von den ersten und zweiten Ventilen zum Zuleiten und Ableiten des Hydraulikmediums umfassen kann. Das Recksystem kann eine Pumpe, wie etwa eine Kolbenpumpe, umfassen, wobei die Pumpe in der wenigstens einen Leitung zum Rückleiten des Hydraulikmediums in den Hydraulikdruckbehälter vorgesehen ist. Innerhalb des Verfahrens kann durch die Pumpe das Verfahren den Schritt des Rückpumpens des Hydraulikmediums aus dem zweiten Behälter in den Hydraulikdruckbehälter umfassen.

Ferner kann die Erfindung ein Verfahren zum Nachrüsten von Blasstationen von Streckblasmaschinen umfassen, wobei dieses Verfahren das Ersetzen von wenigstens einem pneumatischen Recksystem mit einer pneumatischen Reckeinheit durch ein Recksystem, wie oben beschrieben, umfassen kann.

Es gilt also, dass das vorliegende erfindungsgemäße System Vorteile gegenüber einem System aufweist, welches pneumatisch betrieben wird. Die Pumpe im Rücklauf leistet in vorteilhafter Weise nur an zentraler Stelle Verschiebearbeit des Hydraulikmediums, welche in letzter Konsequenz die Reckzylinder dezentral betätigt. Die Pumpe kann eine solche Arbeit nahezu verlustfrei aus mechanischer Bewegung / elektrischer Energie aufnehmen. Ein gasförmiges Medium, wie etwa Druckluft, ist kompressibel und erwärmt sich beim Komprimieren. Ein hydraulisches Medium, wie etwa Wasser, hat dieses Problem nicht.

An dieser Stelle liegt der große energetische Vorteil des erfindungsgemäßen Recksystems:
Während bei der klassischen Ausführung beim Erzeugen von Druckluft nach dem Stand der Technik die entstehende Kompressionswärme (meist außerhalb der Blasmaschine) aufwendig abgeführt werden muss (oft noch mit zusätzlichem energetischen Aufwand durch eine Kältemaschine), wird in der vorliegenden Erfindung lediglich Verschiebearbeit eines inkompressiblen Mediums gegen eine Feder (Gasfeder) geleistet, die im nächsten Moment gleich wieder abgerufen wird. Kompressionswärme und Expansionskälte halten sich -abgesehen von entstehender innerer Reibung der Gasfeder und des Hydraulikmediums- die Waage.

In dem Hydraulikdruckbehälter kann die Druckluft zum Einstellen eines wesentlichen konstanten mittleren Drucks verwendet werden. Das Ausgleichen von kleinen Druckschwankungen im Hydraulikdruckbehälter geschieht durch das Druckluftvolumen. Das Druckluftvolumen ist im wesentlich ein einmalig zu befüllendes Volumen, ein etwaiger Verbrauch von Druckluft hier kann in der Regel sehr klein sein im Vergleich zu in der Größenordnung von hunderten von Kubikmetern bei einem pneumatischen System. Das System erlaubt sogar das Nachrüsten bestehender Anlagen.

Der Erfindungsgegenstand wird anhand der nachfolgenden Zeichnungen beispielhaft erläutert.

Es zeigen:
- Fig. 1: eine Schemaaufsicht einer Streckblasmaschine (Rundläufer),
- Fig. 2: eine Prinzipskizze eines Recksystems entsprechend der vorliegenden Erfindung,
- Fig. 3: eine weitere Ausbildung eines Recksystems entsprechend der vorliegenden Erfindung;
- Fig. 4: ein Verfahren Recken von Vorformlingen mittels eines Recksystems entsprechend der vorliegenden Erfindung.

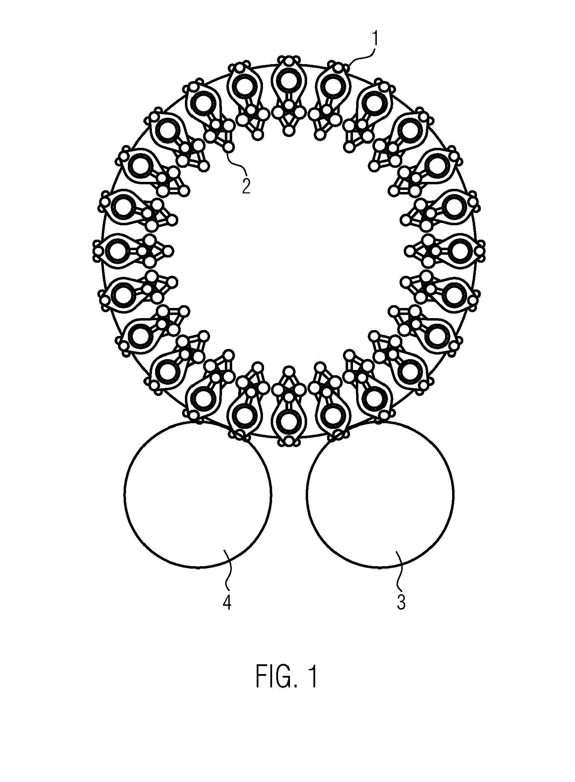

Figur 1 zeigt eine Aufsicht auf eine Streckblasmaschine zum Streckblasen von Behältern, wie etwa Flaschen, aus Vorformlingen/Preforms, wie im Stand der Technik bekannt. Die Streckblasmaschine in Fig. 1 ist als Rundläufer ausgebildet. Die Streckblasmaschine als Rundläufer besitzt beispielsweise ein umseitig Blasstationen 1 tragendes Blasrad 2. Das Blasrad 2 repräsentiert ein sich drehendes Teil, welches in Relation zu einem stehenden Teil (hier nicht explizit gezeigt) steht. Figur 1 zeigt ferner ein Transferrad 3, welches ein Vorformling-Transferrad sein kann. Mittels des Transferrads 3 können Vorformlingen an Blasstationen 1 des Blasrads 2 übergeben werden. Das Blasrad 2 kann typischerweise mehrere Blasstationen 1 aufweisen, beispielsweise kann ein Blasrad 40 Blasstationen aufweisen. Die Zahl der Blasstationen eines Blasrades 2 kann jedoch von diesem Wert abweichen. Ferner zeigt Fig. 1 ein Transferrad 4 zum Transfer von gereckten, geblasenen Behältern, wie etwa Flaschen. Es versteht sich, dass derartige Behälter aus einem Material, wie etwa Polyethylenterephthalat (PET) gefertigt sein können.

Es versteht sich ferner, dass das erfindungsgemäße Konzept ohne Einschränkung auch für Streckblasmaschinen verwendbar ist, bei denen die Blasstationen oder wenigstens eine Blasstation stationär angeordnet sind (hier nicht gezeigt). Es versteht sich ferner, dass Temperaturaspekte, wie insbesondere ein mögliches Erwärmen von Vorformlingen dem Fachmann bekannt sind und an dieser Stelle nicht diskutiert werden.

Eine mögliche Streckblasmaschine kann ähnlich einer Krones Contiform-Maschine ausgerüstet sein.

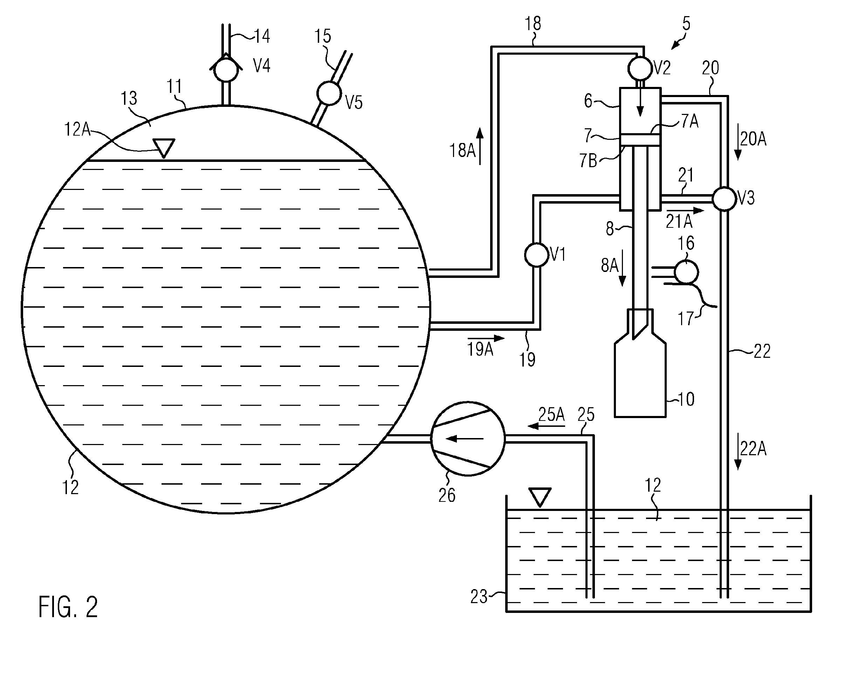

Die Figur 2 zeigt ein erfindungsgemäßes Recksystem für eine Streckblasmaschine zum Streckblasen von Behältern aus Vorformlingen. Fig. 2 zeigt eine Reckeinheit 5 mit einem Reckzylinder 6 und einem Reckkolben 7 sowie einer Reckstange 8. An der Reckstange 8 ist ein Vorformling 10 angedeutet, der mittels der Reckstange 8 gereckt werden kann. Die Reckrichtung ist durch das Bezugszeichen 8A bezeichnet. Die Reckstange 8 kann ferner seitlich mit einer Führungsrolle 16 versehen sein. Die Führungsrolle 16 kann rollenartig oder radartig ausgebildet sein. Die Führungsrolle 16 kann sich auf einer Führungsschiene 17 bewegen. Durch die Führungsschiene 17 kann zumindest die Bewegung der Reckstange 8 nach unten geführt und damit kontrolliert werden. Durch die Führungsschiene beschreibt die Stange eine Kurvenbahn.

Figur 2 zeigt ferner, dass die Reckeinheit 5 des Recksystems über Zuleitungen 18 und 19 mit einem Hydraulikmedium 12, wie etwa Wasser, versorgt werden kann. Ebenso kann das Hydraulikmedium 12 aus dem Reckzylinder 6 durch Leitungen 20, 21 und 22 abgeleitet werden. Dabei können die Leitungen 18 und 19 zum Zuleiten des Hydraulikmediums 12, sowie Leitungen 20, 21 und 22 zum Ableiten des Hydraulikmediums 12 Ventile aufweisen. In Fig. 2 weist die Leitung 19 das Ventil V1 auf. Die Fließrichtung des Hydraulikmediums 12 in der Leitung 19 ist durch den Pfeil 19A angedeutet. Ebenso weist die Zuleitung 18 das Ventil V2 auf. Die Fließrichtung des Hydraulikmediums 12 ist durch den Pfeil 18A angedeutet. Die Ventile V1 und V2 in den Leitungen 18 und 19 können einfache Öffnungs- und Schließventile sein. Es sind aber auch andere Ventilformen möglich. In Fig. 2 ist das Ventil V3 ein Ventil, das wenigstens eine Schließstellung hat aber ebenso einen Fließweg zwischen den Leitungen 20 und 22 einerseits, oder den Leitungen 21 und 22 schalten kann. Die Fließrichtung des Hydraulikmediums 12 in der Leitung 21 ist durch den Pfeil 21A angedeutet. Die Fließrichtung des Hydraulikmediums 12 in der Leitung 20 ist durch den Pfeil 20A angedeutet. Ebenso ist die Fließrichtung des Hydraulikmediums 12 in der Leitung 22 durch den Pfeil 22A angedeutet. Die Leitung 18, 19, 20, 21 und 22 können als geeignete Rohre ausgebildet sein. Die Rohre können aus einem geeigneten Material, wie etwa Kunststoffkeramik oder Metall gefertigt sein. Der Reckzylinder 6 in Fig. 2 ist dargestellt als ein doppelt wirkender Zylinder. Dieser Zylinder hat in seinem oberen Teil nahe dem oberen Ende des Reckzylinders 6 die Leitung 20 vorgesehen. Der Reckzylinder 6 hat in seinem unteren Teil nahe dem unteren Ende die Leitung 21 vorgesehen. In den Reckzylinder 6 bewegt sich der Reckkolben 7, an dem beispielsweise die Reckstange 8 befestigt ist. Der Reckkolben 7 hat eine Oberfläche 7a, welche in der Zeichnung die obere Oberfläche des Reckkolbens 7 ist. Der Reckkolben 7 hat ferner eine weitere Oberfläche 7b, welche in der Fig. 2 die untere Oberfläche des Reckkolbens 7 ist. Die Reckstange 8 wird im unteren Teil des Reckzylinders 6 geeignet aus dem Reckzylinder 6 herausgeführt. Entsprechende Dichtungen sind in der Fig. 2 nicht gezeigt. In dem Reckzylinder 6, wie in der Fig. 2 gezeigt, kann außer in den Maximalstellungen, d.h. in denen der Reckkolben 7 im Wesentlichen ganz nach unten geschoben oder im Wesentlichen ganz nach oben geschoben ist, zu jeder Zeit Hydraulikmedium 12 oberhalb und unterhalb der Oberflächen 7a und 7b des Reckkolbens 7 vorhanden sein. Entsprechend steuern die Ventile V1, V2 und V3 in Fig. 2 den Zufluss und Abfluss von Hydraulikmedium 12. Das Hydraulikmedium 12 wird in Fig. 2 aus einem Hydraulikdruckbehälter 11 gespeist. In dem Hydraulikdruckbehälter 11 befindet sich das Hydraulikmedium 12, beispielsweise Wasser. Das Hydraulikmedium 12 nimmt beispielsweise den überwiegenden Teil des Volumens des Hydraulikdruckbehälters 11 ein. Typischerweise befindet sich das Hydraulikmedium 12 im unteren Bereich des Hydraulikdruckbehälters 11. Im oberen Bereich des Hydraulikdruckbehälters 11 ist ein Volumen eines gasförmigen Mediums 13, wie etwa Druckluft, vorgesehen. Zwischen dem gasförmigen Medium 13 und dem Hydraulikmedium 12 ist die Oberfläche des Hydraulikmediums 12 mit dem Bezugszeichen 12A bezeichnet. Die Volumendruckluft, welche typischerweise im oberen Teil des Hydraulikdruckbehälters 11 vorhanden ist, erzeugt einen im Wesentlichen im Mittel konstanten Druck in dem Druckbehälter 11. Der Druckbehälter 11 hat ferner eine Zuleitung 14 für Druckluft, welcher mit einem Ventil V4 versehen ist. Beispielweise ist in Fig. 2 das Ventil V4 als ein Rückschlagventil 4 ausgebildet. Im Wesentlichen kann die Zuleitung 14 dazu dienen, das Druckluftvolumen 13 im Hydraulikdruckbehälter 11 mit Druckluft zu befüllen. Auch kann über diese Zuleitung 14 ggf. Druckluft in den Hydraulikdruckbehälter 11 nachgeleitet werden. Anstelle von Druckluft kann auch ein anderes geeignetes gasförmiges Medium verwendet werden. Der Hydraulikdruckbehälter 11 ist ferner in Fig. 2 mit einer Sicherheitsleitung 15 versehen. Diese ist mit einem Ventil V5 versehen, welches als Überdruckventil ausgebildet ist. Durch die Verwendung der Zuleitung mit Ventil V4, welches als Rückschlagventil ausgebildet ist und der Sicherheitsleitung 15 mit Ventil V5, welches als Sicherheitsventil, also Überdruckventil ausgebildet ist, kann der Druck im Hydraulikdruckbehälter 11, d.h. insbesondere im Bereich des Druckluftvolumens zwischen einem vordefinierten Minimalwert und einem vordefinierten Maximalwert gehalten werden. Gegebenenfalls kann dieser Wert beispielsweise über die Ventile V4 und V5 eingestellt oder gesteuert werden. Beispielsweise kann in dem Hydraulikdruckbehälter 11 in Fig. 2 ein Druck zwischen 6 und 10 bar herrschen. Ferner ist der Hydraulikdruckbehälter 11 mit einer Zuleitung 25 versehen. Durch die Zuleitung 25, welche eine Fließrichtung 25A aufweist, strömt Hydraulikmedium 12 wieder in den Hydraulikdruckbehälter 11 hinein. Dabei ist zu bemerken, dass eine Pumpe 26, die etwa eine Kolbenpumpe ist, dass Rückpumpen von Hydraulikmedium 12 in den Hydraulikdruckbehälter 11 erzielen kann und damit auch verhindert, das Hydraulikmedium 12 aus dem Hydraulikdruckbehälter 11 durch die Leitung 25 wieder zurückfließen kann. Es ist ebenso möglich (hier nicht gezeigt), dass die Leitung 25 mit einem weiteren Sicherheitsventil z.B. einem Rückschlagventil versehen ist, welches das Rückfließen von Hydraulikmedium 12 verhindern kann.

Figur 2 zeigt zwischen den Leitungen 22 und 25 einen zweiten Behälter 23. Dieser zweite Behälter ist als Sammelbehälter ausgebildet. In Fig. 2 ist dieser Behälter als offener Behälter skizziert. Es kann jedoch ebenso ein zumindest teilweise geschlossener Behälter sein. Ebenso ist ein geschlossener Behälter mit einer Druckausgleichsfunktion oder Belüftungsfunktion möglich. Der Druck im zweiten Behälter 23 sollte nicht wesentlich vom Umgebungsdruck abweichen. Der zweite Behälter 23 nimmt beispielsweise Hydraulikmedium 12, welches aus dem Reckzylinder 6 während des Reckvorgangs, also des Spannens des Reckzylinders 6 oder während des Hochschiebens des Reckkolbens 7, also Entspannens des Reckzylinders 6 aus dem Reckzylinder 6 abfließt, auf. Da der Hydraulikdruckbehälter 11 geschlossen ist und die Leitung 25 mit der Pumpe 26 ein Herausfließen oder gar Zurückfließen von Hydraulikmedium 12 aus dem Hydraulikdruckbehälter 11 verhindert, wird der Abfluss von Hydraulikmedium 12 aus dem Hydraulikdruckbehälter 11 durch die Ventile V1, V2 und V3 entsprechend gesteuert. Eine Steuerung kann durch eine entsprechende Steuer- und/oder Kontrolleinheit erfolgen, beispielsweise kann eine Steuerung durch einen externen Computer erfolgen.

In einer Variante könnte der Behälter 23 als geschlossener Druckbehälter ausgeführt werden, in dem ein Druck eingestellt wird, der kleiner sein muss als im Behälter 11. In dieser Konstellation würde die Verschiebearbeit der Pumpe 26 entlastet und es könnte damit zusätzlich Energie eingespart werden.

In einem Beispiel soll ein Reckzylinder mit einem Volumen von ca. 0,5 I betrachtet werden. Die Pumpe soll das Hydraulikmedium, etwa Wasser, mit etwa 6 bar zurück in den Hydraulikdruckbehälter schieben. Die Maschine, die beispielsweise mit mehreren Reckeinheiten ausgestattet ist, kann beispielsweise 36000 Flaschen pro Stunde verarbeiten. Für jede Flasche ergibt sich beim Reckvorgang ein maximaler Hub (Summe von Hub nach unten und oben) von 2 x 0,5 l Volumen. Daraus ergibt sich eine erforderliche Leistung von ca. 6 kW. Entsprechend ergeben sich eventuelle Verluste durch den Wirkungsgrad der Pumpe. Falls mehrere Kreisläufe zur Betätigung des Reckzylinders vorgesehen würden, könnte eine weitere Reduzierung der erforderlichen Leistung erfolgen, beispielsweise wenn zur Betätigung des Reckzylinders zwei Kreisläufe vorgesehen würden.

Zum Vergleich soll eine mit Druckluft betriebene Reckeinheit betrachtet werden. Dort hätte man ebenfalls einen Druck von circa 6 bar. Der Volumenbedarf an Druckluft für die bereits genannte Zahl von etwa 36000 Flaschen pro Stunde ist typischerweise ca. 200 m³/h. Insgesamt würde hierzu bei einem bekannten, handelsüblichen 6 bar Kompressor circa eine Leistungsaufnahme von 25 kW notwendig sein (inkl. Kühler).

Die erforderliche Leistung im ersten, hydraulischen Fall ist also deutlich niedriger als im zweiten, pneumatischen Fall.

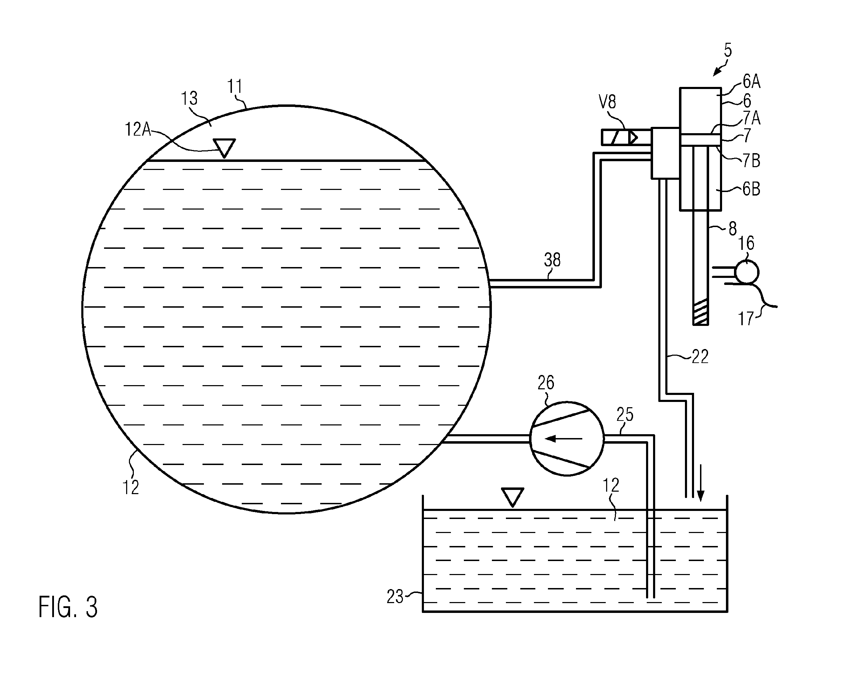

Die Fig. 3 zeigt eine weitere Ausbildung entsprechend der vorliegenden Erfindung. Die Elemente der Fig. 3 ähneln den Elementen der Fig. 2. Gleiche Elemente sind mit gleichen Bezugszeichen in der Fig. 3 bezeichnet. Eine Zuleitung mit Rückschlagventil und eine Sicherheitsleitung mit Sicherheitsventil sind in Fig. 3 nicht explizit gezeigt. Allerdings versteht es sich, dass diese Elemente auch in Fig. 3 vorhanden sein können und den Elementen, wie in Fig. 2 gezeigt, entsprechen können. In der Fig. 3 ist im Unterschied zu der Fig. 2 die Zuleitung und die Rückleitung von Hydraulikmedium 12 zur Reckeinheit 5, d.h. zum Reckzylinder 6 anders ausgebildet. Eine Zuleitung 38 führt zu einem Ventilelement V8, welches beispielsweise elektronisch geschaltet werden kann. Dieses Ventilelement ist derart schaltbar, dass es sowohl geeignet ist, den Reckkolben 7 im Reckzylinder 6 zu spannen, also wie in der Zeichnung gezeigt, nach unten zu bewegen, oder den Reckkolben 7 im Reckzylinder 6 nach oben zu bewegen. Das bedeutet, dass die Einheit V8 Hydraulikmedium 12 in den Reckzylinder 6 entweder oberhalb der Oberfläche 7a, d.h. der oberen Oberfläche des Reckkolbens 7, oder unterhalb der Oberfläche 7b, d.h. der unteren Oberfläche des Reckkolbens 7 leiten kann. Ebenso kann die Einheit mit Ventil V8 beim Bewegen des Reckkolbens 7 Hydraulikmedium 12 aus dem Bereich des Reckzylinders 6, der durch die Bewegung oder während der Bewegung des Reckkolbens 7 sich jeweils verkleinert, herausleiten. Dieses Hydraulikmedium 12 gelangt durch die Leitung 22 in dem zweiten Behälter 23. Es versteht sich, dass die Einheit mit dem Ventil V8 nur schematisch in Fig. 3 gezeichnet ist. Die übrigen Funktionen in der Fig. 3 entsprechen denen der Elemente in der Fig. 2.

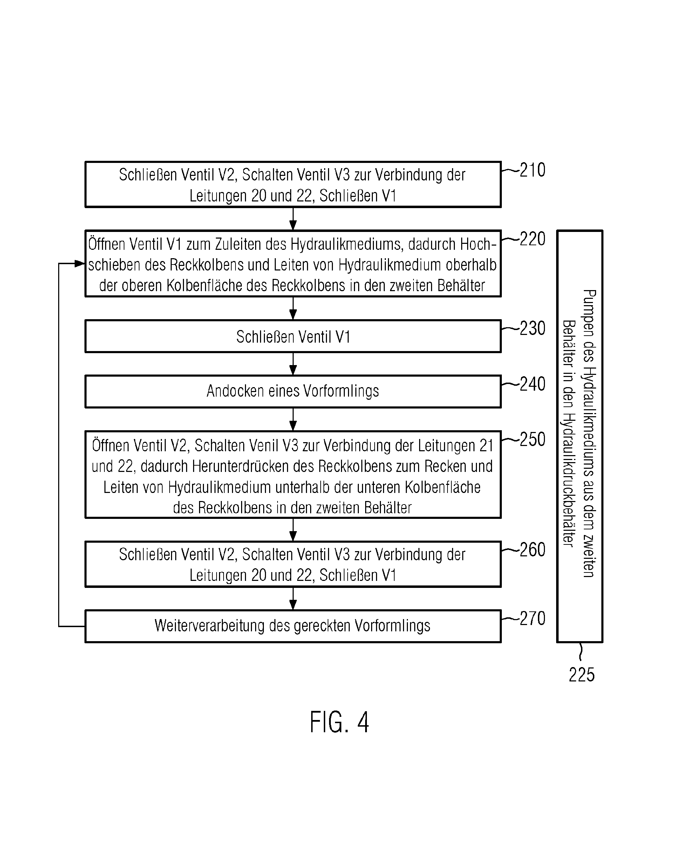

Die Fig. 4 zeigt ein erfindungsgemäßes Verfahren, welches entsprechend der Fig. 2 oder, sinngemäß entsprechend der Fig. 3 ausgeführt werden kann. Das Verfahren zum Recken von Vorformlingen mittels eines Recksystems entsprechend den genannten Figuren beinhaltet die folgenden Schritte. In Vorbereitung, nicht explizit in Fig. 4 genannt, ist der Hydraulikdruckbehälter 11 bereits mit Hydraulikmedium 12, wie etwa Wasser, und einem gasförmigen Medium 13, wie etwa Druckluft, gefüllt. In dem Hydraulikdruckbehälter 11 herrscht also ein Überdruck. In Schritt 210 erfolgt das Schließen des Ventils V2. Ferner erfolgt das Schalten des Ventils V3 zur Verbindung der Leitung 20 und 22 in der Fig. 2. Ferner erfolgt das Schließen des Ventils V1 in der Leitung 19 der Fig. 2. Entsprechend würde in der Fig. 3 das Ventil V8 die Zuleitung 38 und die Rückleitung 22 schließen.

In Schritt 220 erfolgt das Öffnen des Ventils V1 zum Zuleiten des Hydraulikmediums 12, dadurch erfolgt das Hochschieben des Reckkolbens 7 in dem Reckzylinder 6. Oberhalb der Oberfläche 7a des Reckkolbens 7 wird vorhandenes Hydraulikmedium 12 über die Leitung 20 die durch das Ventil V3 in Verbindung mit der Leitung 22 geschaltet ist, aus dem Reckzylinder 6 herausgeleitet. Das herausgeleitete Hydraulikmedium 12 wird in den zweiten Behälter 23 geleitet. Entsprechend würde in Fig. 3 die Einheit V8 derart geschaltet werden, dass sie das Zuleiten von Hydraulikmedium 12 durch die Leitung 38 ermöglicht und das Ableiten von Hydraulikmedium 12 durch die Leitung 22. Dabei ist zu beachten, dass die Größenverhältnisse in Fig. 3 nicht maßstabsgerecht gezeichnet sind.

In Schritt 230 erfolgt das Schließen des Ventils V1. Dies erfolgt, wenn der Reckkolben 7 im Reckzylinder 6 seine maximale, d.h. oberste mögliche Position erreicht hat. Diese Position muss nicht notwendigerweise mit dem oberen Ende des Kolbens abschließen, in der Regel wird aber der gesamte Hub nach oben im Reckzylinder 6 ausgenutzt werden. Oberhalb der Fläche 7a des Reckkolbens 7 befindet sich somit nur noch wenig Hydraulikmedium 12, während unterhalb der Fläche 7b der Reckkolben 7 mit Hydraulikmedium 12 gefüllt ist. An dieser Stelle erfolgt im Schritt 240 das Einlegen eines Vorformlings in die Blasstation, so dass der Vorformling sich nun unterhalb der Reckstange (nicht abgebildet) befindet, welche von der Reckstange 8 angetrieben wird. Im Schritt 250 wird das Ventil V2 geöffnet und das Ventil V3 wird geschaltet zur Verbindung der Leitung 21 und 22 in Fig. 2. Durch das Öffnen des Ventils V2 und das Schalten des Ventils V3 wird das Herunterdrücken des Reckkolbens 7 zum Recken ermöglicht und Hydraulikmedium 12 unterhalb der Oberfläche 7b wird durch die Leitung 21 aus dem Reckzylinder 6 geleitet. Dieses Hydraulikmedium 12 wird wiederum in den zweiten Behälter geleitet. Entsprechend würde in der Fig. 3 das Ventil V8 derart geschaltet werden, dass das Zuleiten durch die Leitung 38 möglich ist, nun aber Hydraulikmedium 12 oberhalb der Fläche 7a des Reckkolbens 7 eingeleitet wird und diesen hinunter schiebt.

In Schritt 260 erfolgt das Schließen des Ventils V2, ebenso erfolgt das Schalten des Ventil V3 und das Verbinden der Leitung 20 und 22 sowie das Schließen des Ventils V1. Der Schritt 260 erfolgt dann, wenn der Reckkolben 7 im Reckzylinder 6 den gewünschten Hubweg ausgeführt hat. Dieser kann beispielsweise der maximale Hubweg nach unten im Reckzylinder 6 sein. Zu diesem Zeitpunkt befindet sich nur noch wenig Hydraulikmedium 12 unterhalb der Fläche 7b. Entsprechend würde auch in Fig. 3 das Ventil V8 die entsprechende Einheit so schalten, dass das Zu- das Abfließen durch die Leitung 38 und 22 unterbunden wäre. Anschließend kann im Schritt 270 eine Weiterverarbeitung des gereckten Vorformlings erfolgen. Das System kann dann zum Schritt 220 zurückkehren und es kann erneut durch das Schalten der Ventile, zunächst des Ventils V1, Hydraulikmedium 12 zugeleitet werden, um den Reckkolben 7 wieder in dem Reckzylinder 6 nach oben zu bewegen. Begleitend kann während der Schritte 220 bis 270 im Schritt 225 das Pumpen des Hydraulikmediums 12 aus dem zweiten Behälter 23 mittels der Pumpe 26 zurück zum Hydraulikdruckbehälter 11 erfolgen. Dieser Pumpvorgang kann beispielsweise kontinuierlich oder in geeigneten, beispielsweise kurzen, Zeitabständen erfolgen.

Die Erfindung stellt auch die Möglichkeit bereit, ein bereits existierendes System, etwa eine Krones Contiform-Einheit oder andere Streckblasmaschinen nachzurüsten. Derartige Maschinen weisen häufig Einheiten auf, die darauf abzielen, Druckluft aus dem System möglichst zu recyceln. Eine derartige recycelte Druckluft würde durch den Einsatz von hydraulisch betätigten Reckzylindern nicht mehr den Reckzylindern zugeführt werden müssen. Hier bietet es sich beispielsweise an, diese Luft im Blasrad zu verstromen und die erzeugte Elektrizität in die Blasmaschine zurückzuspeisen. Dadurch ergäbe sich die Möglichkeit, den Gesamtenergiebedarf der Maschine weiter zu senken. Für die Verstromung im Blasrad könnte beispielsweise eine Druckluft-getriebene Turbine in Frage kommen, die an einen Generator gekoppelt wird. Dabei handelt es sich um eine robuste Lösung, die für ein abgeschlossenes, existierendes System gut anwendbar ist. Das heißt, die Erfindung ermöglich es, beim nachrüsten bestehender Systeme die recycelte Druckluft im System weiter einzusetzen und den Energiebedarf des Systems weiter zu senken.

Es versteht sich, dass in den zuvor beschriebenen Ausführungsbeispiele genannte Merkmale sich nicht auf die speziell in den Figuren gezeigten Kombinationen beschränken, sondern auch in beliebigen anderen Kombinationen möglich sein können.

## Patentansprüche

1. Recksystem für Streckblasmaschinen zum Streckblasen von Behältern (10) aus Vorformlingen, mit wenigstens einer Reckeinheit (5), die zum Recken eines Vorformlings hydraulisch betätigt wird, mit einem Hydraulikdruckbehälter (11), der zumindest teilweise mit einem Hydraulikmedium (12), beispielsweise Wasser, gefüllt ist und der zumindest teilweise mit einem gasförmigen Medium (13), beispielsweise Druckluft, gefüllt ist; wobei die Reckeinheit (5) einen Reckzylinder (6) und einen Reckkolben (7) umfasst, **dadurch gekennzeichnet, dass** das Recksystem ausgebildet ist, das Hydraulikmedium (12) aus dem Hydraulikdruckbehälter (11) zum Reckzylinder (6) der Reckeinheit (5) zu leiten, wodurch der Reckkolben (7) im Reckzylinder (6) hydraulisch bewegt werden kann.

2. Recksystem nach Anspruch 1, wobei die Reckeinheit (5) ferner wenigstens eine Zuleitung (18, 19) wie etwa ein Rohr umfasst, um das Hydraulikmedium (12) aus dem Hydraulikdruckbehälter (11) zum Reckzylinder (6) zu leiten, und wenigstens eine Leitung (20, 21, 22, 25) wie etwa ein Rohr umfasst, um das Hydraulikmedium (12) aus dem Reckzylinder wieder in den Hydraulikdruckbehälter (11) zurück zu leiten.

3. Recksystem nach Anspruch 2, wobei die wenigstens eine Zuleitung (18, 19) wenigstens ein erstes Ventil (V1, V2, V8) umfasst, und wobei die wenigstens eine Leitung (20, 21, 22, 25) wenigsten ein zweites Ventil (V3) umfasst, wobei die ersten und zweiten Ventile das Zuleiten und Ableiten des Hydraulikmediums (12) aus dem Reckzylinder (6) steuern.

4. Recksystem nach Anspruch 3, wobei das Recksystem ferner eine Pumpe (26) wie etwa eine Kolbenpumpe umfasst, wobei die Pumpe (26) in der wenigstens einen Leitung (20, 21, 22, 25) zum Rückleiten des Hydraulikmediums (12) in den Hydraulikdruckbehälter (11) vorgesehen ist.

5. Recksystem nach Anspruch 4, wobei das Recksystem ferner einen zweiten Behälter (23) umfasst, um das Hydraulikmedium (12) aufzunehmen, das beim Bewegen des Reckkolbens (7) im Reckzylinder (6) aus dem Reckzylinder (6) geleitet wird, wobei der zweite Behälter (23) in der wenigstens einen Leitung (20, 21, 22, 25) zum Rückleiten des Hydraulikmediums (12) vorgesehen ist, wobei die Pumpe (26) zwischen dem zweiten Behälter (23) und dem Hydraulikdruckbehälter (11) vorgesehen ist.

6. Recksystem nach einem der Ansprüche 1 - 5, wobei der Hydraulikdruckbehälter (11) ferner eine Zuführleitung für das gasförmige Medium (13) aufweist, welche mit einem Ventil wie etwa einem Rückschlagventil (V4) versehen ist, und wobei der Hydraulikdruckbehälter (11) ferner eine Sicherheitsleitung (15) mit einem Sicherheitsventil (V5) aufweist.

7. Recksystem nach einem der Ansprüche 1 - 6, wobei der Druck im Hydraulikdruckbehälter (11) zwischen einem vordefinierten Minimalwert und einem vordefinierten Maximalwert liegt.

8. Recksystem nach Anspruch 5, wobei der Druck im zweiten Behälter (23) im Wesentlichen dem Umgebungsdruck entspricht.

9. Recksystem nach einem der Ansprüche 5 oder 8, wobei der zweite Behälter (23) ein Sammelbehälter ist.

10. Verfahren zum Recken von Vorformlingen mittels eines Recksystems mit wenigstens einer Reckeinheit (5), wobei die Reckeinheit (5) einen Reckzylinder (6) und einen Reckkolben (7) umfasst, sowie mit einem Hydraulikdruckbehälter (11), der zumindest teilweise mit einem Hydraulikmedium (12) wie etwa Wasser gefüllt ist und der zumindest teilweise mit einem gasförmigen Medium (13), beispielsweise Druckluft, gefüllt ist, wobei die Reckeinheit (5) wenigstens eine Zuleitung (18, 19), beispielsweise ein Rohr, und wenigstens eine Leitung (20, 21, 22, 25), beispielsweise ein Rohr, umfasst, mit den Schritten:
Recken eines Vorformlings durch hydraulisches Betätigen der Reckeinheit (5).
Zuleiten des Hydraulikmedium (12) zum Reckzylinder (6) der Reckeinheit (5) durch die wenigstens eine Zuleitung;
Bewegen des Reckkolbens (7) im Reckzylinder (6) mittels des zugeführten Hydraulikmediums (12).

11. Verfahren nach Anspruch 10, das ferner das Rückleiten des Hydraulikmediums (12) zum Hydraulikdruckbehälter (11) durch die wenigstens eine Leitung (20, 21, 22, 25).

12. Verfahren nach Anspruch 11, wobei die wenigstens eine Zuleitung (18, 19) wenigstens ein erstes Ventil (V1, V2, V8) umfasst, und wobei die wenigstens eine Leitung (20, 21, 22, 25) wenigstens ein zweites Ventil (V3) umfasst, wobei das Verfahren ferner das Steuern der ersten und zweiten Ventile zum Zuleiten und Ableiten des Hydraulikmediums (12) umfasst.

13. Verfahren nach Anspruch 12, wobei das Recksystem ferner eine Pumpe (26) wie etwa eine Kolbenpumpe umfasst, wobei die Pumpe (26) in der wenigstens einen Leitung (20, 21, 22, 25) zum Rückleiten des Hydraulikmediums (12) vorgesehen ist, wobei das Recksystem einen zweiten Behälter (23) zum Aufnehmen des Hydraulikmedium (12) umfasst, das beim Bewegen des Reckkolbens (7) im Reckzylinder (6) aus dem Reckzylinder (6) geleitet wird, wobei der zweite Behälter (23) in der wenigstens einen Leitung (20, 21, 22, 25) zum Rückleiten des Hydraulikmediums (12) vorgesehen ist, wobei die Pumpe (26) zwischen dem zweiten Behälter (23) und dem Hydraulikdruckbehälter (11) vorgesehen ist.

14. Verfahren nach Anspruch 13, das das Rückpumpen des Hydraulikmediums (12) aus dem zweiten Behälter (23) in den Hydraulikdruckbehälter (11) umfasst.

15. Verfahren zum Nachrüsten von Blasstationen von Streckblasmaschinen, umfassend:
Ersetzen von wenigstens einem pneumatischen Recksystem mit pneumatischer Reckeinheit durch ein Recksystem nach einem der Ansprüche 1 - 9.
